# EUROPEAN PATENT SPECIFICATION

(11) **EP 3 205 438 B1**
(45) Date of publication and mention of the grant of the patent: **10.03.2021**
(21) Application number: 17153232.8
(22) Date of filing: 26.01.2017
(51) Int. Cl.: B23K 26/042, B23K 26/382, B23H 1/00, B23H 9/14, B23H 11/00, B22F 3/105, B22F 3/20, B22F 5/10, B23K 26/08, B24C 1/04, B29C 67/00, B33Y 30/00, B33Y 10/00, B26D 5/00, B26D 7/06, B33Y 50/02, B33Y 80/00, B26F 1/26, B26F 1/28, B23K 26/384

(54) **SYSTEMS AND METHODS FOR FORMING A VENT ALONG AN ANGLE THROUGH A MATERIAL**
SYSTEME UND VERFAHREN ZUM FORMEN EINER ÖFFNUNG UNTER EINEM WINKEL IN EINEM MATERIAL
SYSTÈMES ET PROCÉDÉS POUR LA FORMATION D'UNE ORIFICE OBLIQUE DANS UN MATÉRIAU

(30) Priority: 12.02.2016 US 201615042378
(43) Date of publication of application: 16.08.2017
(73) Proprietor: The Boeing Company, Chicago, IL 60606-2016 (US)
(72) Inventor: COFFMAN, Matthew A, Chicago, IL Illinois 60606-2016 (US)
(74) Representative: Boult Wade Tennant LLP

(56) References cited:
- EP-A2- 0 846 875
- DE-C- 813 790
- US-A- 4 955 164
- US-B1- 6 507 002
- US-B1- 7 214 901
- SHENG YANG ET AL: "A new part consolidation method to embrace the design freedom of additive manufacturing", JOURNAL OF MANUFACTURING PROCESSES, vol. 20, 1 October 2015 (2015-10-01), pages 444-449, XP055379173, US ISSN: 1526-6125, DOI: 10.1016/j.jmapro.2015.06.024
- Harris Prof. Russ: "The 7 categories of Additive Manufacturing | Additive Manufacturing Research Group | Loughborough University", , 16 July 2015 (2015-07-16), pages 1-4, XP55379092, Internet Archive Wayback machine Retrieved from the Internet: URL:https://web.archive.org/web/2015071603 2115/http://www.lboro.ac.uk:80/research/am rg/about/the7categoriesofadditivemanufactu ring/ [retrieved on 2017-06-07]
- Anonymus: "The 7 categories of Additive Manufacturing | Additive Manufacturing Research Group | Loughborough University", , 7 June 2017 (2017-06-07), pages 1-4, XP55379100, Retrieved from the Internet: URL:http://www.lboro.ac.uk/research/amrg/a bout/the7categoriesofadditivemanufacturing / [retrieved on 2017-06-07]

## Description

### TECHNICAL FIELD

The technical field relates generally to forming holes through materials, and more particularly, for example, to forming biaxial symmetric canted holes.

### BACKGROUND

In the field of forming holes through materials to vent fluid or gaseous media, there is an ongoing effort to provide improvements and cost savings to efficiently and effectively vent media. Conventional techniques of forming large arrays of holes for use as vents may significantly add aerodynamic resistance, be susceptible to surface cracks and/or have associated design issues.

In DE 813790 there is described a manufacturing machine used for various machining operations. This document relates to a manufacturing machine with which the most varied machining operations of workpieces or tools are to be carried out and which have a guide bed. Bed slide, support, tailstock and fixed headstock is provided. The bed slide is pivotable and adjustable transversely to the longitudinal axis of the guide bed. The pivoting of the support carriage about the longitudinal axis of the guide bed is easy to do, since the pivotable masses can be easily compensated.

Other relevant prior art is known from US4955164, US6507002, US7214901, EP0846875, XP055379193, XP55379092, and XP55379100.

### SUMMARY

There is described herein a method for forming a vent, comprising: determining a forming angle for a vent through a material, wherein the forming angle varies in a range of five degrees to eighty-five degrees from an angle perpendicular to a first surface of the material; determining a central axis of the vent along the forming angle; and forming the vent in the material about the central axis along the forming angle, wherein the vent is formed by making a plurality of small cuts in the material in a pattern dependent on the forming angle such that a first opening of the vent on the first surface of the material is circular in shape when viewed at an angle perpendicular to the first surface of the material; wherein the forming the vent further comprises forming the circular shape with a first diameter at the first opening of the vent on the first surface of the material and forming the circular shape with a second diameter at a second opening of the vent on a second surface of the material.

There is also described herein a vent fabrication system comprising: a cutting system; and a controller configured to: receive a forming angle for a vent through a material, wherein the forming angle varies in a range of five degrees to eighty-five degrees from an angle perpendicular to a first surface of the material; receive a central axis of the vent along the forming angle; and control the cutting system to form the vent in the material about the central axis along the forming angle, wherein the vent is formed by making a plurality of small cuts in the material in a pattern dependent on the forming angle such that a first opening of the vent on the first surface of the material is circular in shape when viewed at an angle perpendicular to the first surface of the material; wherein the forming the vent further comprises forming the circular shape with a first diameter at the first opening of the vent on the first surface of the material and forming the circular shape with a second diameter at a second opening of the vent on a second surface of the material

Systems and methods are disclosed herein in accordance with one or more embodiments that provide an improved approach to forming holes in materials. In some embodiments, a canted hole is formed as a vent in a panel disposed parallel to a fluid flow to provide for air and/or fluid to flow through the vent. In one example, a forming angle and a central axis for a vent through a panel is determined. A vent is formed in the panel about a central axis along the forming angle. The angled vent is formed with a circular shape at a first opening of the vent on a first surface of the panel when viewed at an angle perpendicular to the first surface of the panel.

The scope is defined by the claims, which are incorporated into this section by reference. A more complete understanding of embodiments will be afforded to those skilled in the art, as well as a realization of additional advantages thereof, by a consideration of the following detailed description of one or more embodiments. Reference will be made to the appended sheets of drawings that will first be described briefly.

### BRIEF DESCRIPTION OF THE DRAWINGS

Fig. 1 illustrates a block diagram of a vent fabrication system in accordance with an embodiment of the disclosure.
Fig. 2A illustrates a view perpendicular to a surface of a vent panel formed with a plurality of vents in accordance with an embodiment of the disclosure.
Fig. 2B illustrates a rotated view of the vent panel of Fig. 2A in accordance with an embodiment of the disclosure.
Fig. 3 illustrates a cross-section view taken at line 3-3 of the vent panel of Fig. 2A in accordance with an embodiment of the disclosure.
Fig. 4A illustrates an isometric view of a vent through a vent panel in accordance with an embodiment of the disclosure.
Fig. 4B illustrates a cross-section view taken at line 4B-4B of the vent panel of Fig. 4A in accordance with an embodiment of the disclosure.
Fig. 4C illustrates a cross-section view taken at line 4C-4C of the vent panel of Fig. 4A in accordance with an embodiment of the disclosure.
Fig. 5 illustrates an exploded view of a laminate vent panel including a vent formed within the vent panel in accordance with an embodiment of the disclosure.
Fig. 6 illustrates a process for forming a vent in a vent panel in accordance with an embodiment of the disclosure.

Embodiments and their advantages are best understood by referring to the detailed description that follows. It should be appreciated that like reference numerals are used to identify like elements illustrated in one or more of the figures.

### DETAILED DESCRIPTION

Techniques are provided to form canted holes in materials, such as for example to provide for efficient fluid flow through the material. Canted holes may be formed as vents in materials, for example, as panels on aircraft for directing airflow along an aircraft skin or directing water flow along the hull of a ship. The panel may include a plurality of vents formed in an array. The vents may be formed at an angle to facilitate the moving flow field at a first surface of the panel. The angled vent, when formed, includes a circular shape opening at a first surface on the panel when viewed at an angle perpendicular to the first surface. Incorporating circular shapes for vent openings at a surface of the panel may simplify design equations used for aerodynamic and electromagnetic analyses. In this regard, the vent design may be optimized for fluid flow, aerodynamic performance, and/or electromagnetic performance.

In various embodiments, a method for forming a vent in a panel includes implementing a cutting system to make a plurality of small cuts about a central axis of the vent along a forming angle (e.g., an angle determined to optimize flow of fluid through the panel) in the panel. Small cuts are made in the material in a pattern such that a first opening of the vent on a first surface of the panel is circular in shape when viewed at an angle perpendicular to the first surface.

In various embodiments, the processing techniques described herein may be advantageously used to reduce aerodynamic resistance as the vents are angled at an offset from perpendicular to the surface of the panel. Angled vents in panels provide for an extended length within the panel compared to perpendicular vents. Extended vent length provides for greater surface area contact with the moving fluid providing for increased thermal transfer or other environmental conditioning advantages where additional internal surface area is required. Furthermore, angled vents incorporating circular shapes on the surface of the vent panel may reduce the possibility of cracks at the perimeter of the vent opening. Incorporating circular shapes on the surface of the vent panel may simplify design equations used for aerodynamic and electromagnetic analyses thereby reducing costs for vent panel design.

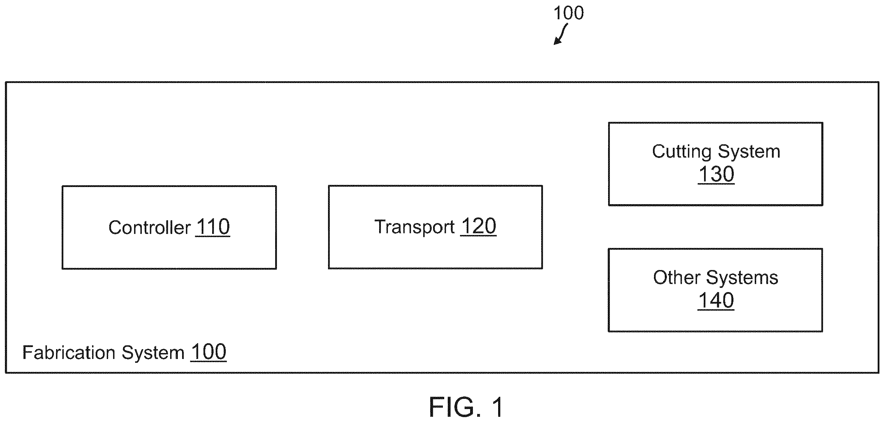

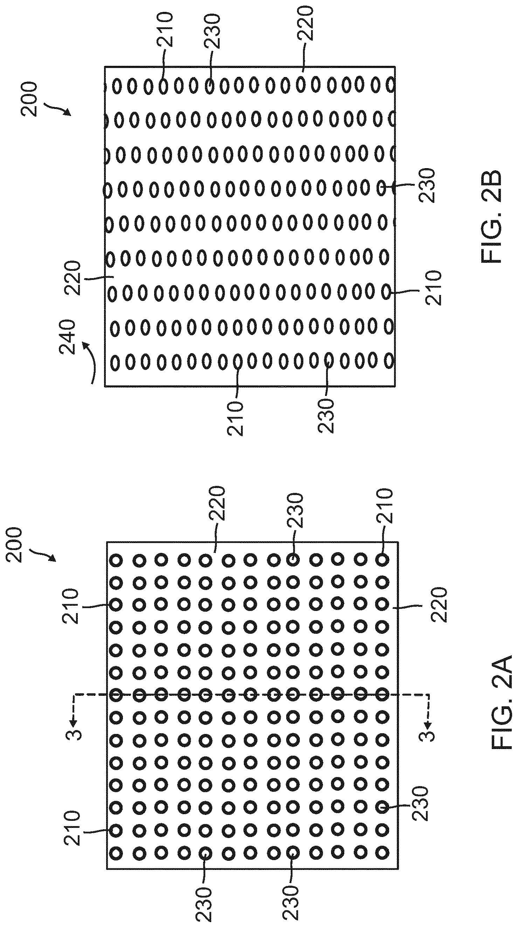

Fig. 1 illustrates a block diagram of a vent fabrication system 100 in accordance with an embodiment of the disclosure. As shown in Fig. 1, vent fabrication system 100 includes a controller 110, a transport 120, a cutting system 130, and other systems 140. Fabrication system 100 may be configured to use multiple different types of manufacturing or fabrication processes to form vents in a panel (e.g., such as vents 210 in panel 200 of Fig. 2A), as described herein. Fig. 2A illustrates a view perpendicular to a surface of a vent panel 200 formed with a plurality of vents 210. Vents 210 may include a biaxial symmetric canted hole (e.g., hole) formed in panel 200 by implementing one or more embodiments of cutting system 130. In various embodiments, controller 110 may be configured to control the various elements of vent fabrication system 100 to form vents in a panel.

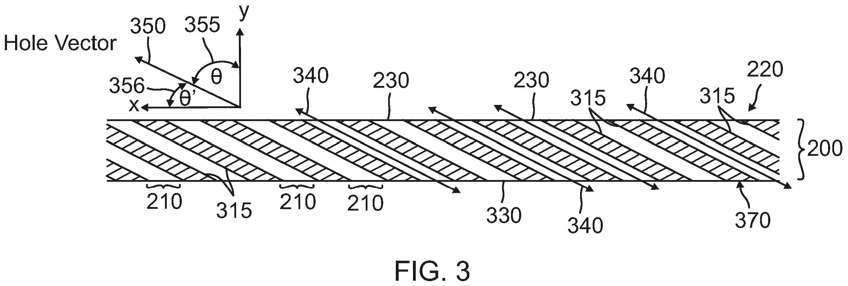

For example, in embodiments where vent fabrication system 100 is implemented as a cutting system 130 (e.g., a waterjet, a laser, and/or an electric discharge machining (EDM) system), controller 110 may be adapted to receive a forming angle (e.g., such as forming angle 350 of Fig. 3) for a vent 210 in a material (e.g., in the form of an electronic data file provided by an external logic device, such as a computer and/or a memory device) and to communicate to cutting system 130 to adjust a cutting head, for example, to the desired forming angle 350. In some embodiments, forming angle 350 may vary in a range of five degrees to eighty-five degrees from an angle perpendicular to a first surface of the material. Furthermore, controller 110 may be adapted to receive x-y coordinates of a central axis (e.g., central axis 340 of Fig. 3) of one or more vents formed in the material and to communicate to cutting system 130 to position the cutting head. Fig. 3 illustrates a cross-section view taken at line 3-3 of the vent panel 200 of Fig. 2A.

Controller 110 may be implemented with any appropriate logic device (e.g., processing device, microcontroller, processor, application specific integrated circuit (ASIC), field programmable gate array (FPGA), memory storage device, memory reader, or other device or combinations of devices) or distributed combination of logic devices that may be adapted to execute, store, receive, and/or provide appropriate instructions, such as software instructions implementing a method and/or control loop for creating a vent 210 in a panel 200, for example, implementing one or more elements of vent fabrication system 100. In addition, controller 110 may be implemented with one or more machine readable mediums configured to store non-transitory instructions and/or data files, such as design data files, for loading into and/or execution by controller 110. Such machine readable mediums may be internal, external, and/or otherwise configured to interface with controller 110. Controller 110 may be configured to receive non-transitory instructions and/or data files from sources remotely located from controller 110 and/or vent fabrication system 100. In these and other embodiments, the logic devices may be implemented with other components where appropriate, such as volatile memory, non-volatile memory, and/or one or more interfaces (e.g., inter-integrated circuit (I2C) interfaces, mobile industry processor interfaces (MIPI), joint test action group (JTAG) interfaces (e.g., IEEE 1149.1 standard test access port and boundary-scan architecture), various types of universal serial bus (USB) interfaces, Bluetooth (TM) interfaces, WiFi interfaces, and/or other wired and/or wireless interfaces).

In general, cutting system 130 may be configured to receive a material (e.g., a panel and/or structure made of a composite, a metal, a foam, and/or a laminate) and form vents in the material. In various embodiments, cutting system 130 may be implemented as a waterjet, a laser, and/or an EDM cutting system. In embodiments where cutting system 130 is at least partially implemented as a waterjet cutting system, a high pressure waterjet nozzle may be positioned to cut the material about the central axis along the forming angle 350 to form vent 210 in the material. In some embodiments, waterjet cutting system may receive instructions from controller 110 to make a plurality of small cuts (e.g., small cuts with a 0.508 mm (0.020 inch) or less kerf size) in the material in a pattern such that a first opening (e.g., such as first opening 230 of Fig. 2A) of vent 210 on a first surface (e.g., such as first surface 220 of Fig. 2A) of the material is circular in shape when viewed at an angle perpendicular to a first surface 220. In some embodiments, an abrasive material (e.g., such as garnet and/or aluminium oxide) may be added within the nozzle to cut, for example, metallic materials.

In embodiments where cutting system 130 is at least partially implemented as a laser cutting system, a focused laser beam is directed at the material to melt, burn, and/or vaporize the material. The focused laser may be positioned and/or adjusted at the material to cut the material about a central axis 340 along forming angle 350 to form vent 210 in the material. Similar to the waterjet cutting system discussed herein, the laser cutting system may receive instructions from controller 110 to make a plurality of small cuts (e.g., small cuts with kerf widths 0.254 mm (0.010 inch) or less) in the material in a pattern such that a first opening 230 of the vent on first surface 220 of the material is circular in shape when viewed at an angle perpendicular to first surface 220.

In embodiments where cutting system 130 is at least partially implemented as an EDM cutting system, (e.g., such as a wire EDM), an electrode is used to remove material. Similar to the waterjet cutting system, the electrode may be positioned and/or adjusted to cut the material about central axis 340 along forming angle 350 to form vent 210 in the material. Again, a plurality of small cuts are made in the material in a pattern dependent on forming angle 350 such that first opening 230 of vent 210 on first surface 220 of the material is circular in shape when viewed at an angle perpendicular to first surface 220.

In various embodiments, other systems 140 may include additive manufacturing (AM) systems such as a material extrusion AM system, a powder bed fusion AM system, and/or a vat photopolymerization AM system. Additive manufacturing systems may be implemented to form the panel and/or structure with the one or more vents 210 incorporated into the design. In this regard, controller 110 may receive a design for a vent panel (e.g., vent panel 200 of Fig. 2A) and provide instructions to the AM system to fabricate the panel with the one or more vents 210 incorporated. In embodiments where other systems 140 is at least partially implemented as a material extrusion AM system, a filament extrusion nozzle may be configured to dispense a material filament from a reel or spool and heat, soften, and/or melt the AM system material filament (e.g., using a heater) as it dispenses the AM system material filament in one or more patterned layers to form the vent panel 200 and/or vent structure on a build support.

In embodiments where other systems 140 is at least partially implemented as a powder bed fusion AM system, granules may be dispensed onto a build support in one or more patterned layers and melted and/or sintered into substantially connected patterned layers to form vent panel 200 and/or other structure incorporating vents. In embodiments where other systems 140 is at least partially implemented as a vat photopolymerization AM system, a bulk AM system material liquid may be dispensed in one or more patterned layers onto a build support to form vent panel 200. One or more lasers and/or other curing devices may be used to cure the patterned layers of the bulk AM system material liquid on build support to form vent panel 200. In all AM systems described herein, one or more vents 210 may be formed at forming angle 350 such that first opening 230 of vent 210 on first surface 220 of the material is circular in shape when viewed at an angle perpendicular to first surface 220.

In various embodiments, panels and/or other structures in various stages of manufacture may be conveyed between elements of vent fabrication system 100 by transport 120, which may be implemented as a device or vacuum chuck conveyance system, for example, and/or other transport configured to retrieve panels, structures, devices, and/or other structures from any element of vent fabrication system 100 and deliver them to another element of vent fabrication system 100. In some embodiments, transport 120 may be implemented, at least in part, by a user conveying a device or structure between elements of vent fabrication system 100. Operation of transport 120 and/or other elements of fabrication system 100, such as, cutting system 130 and/or other systems 140, may be controlled and/or otherwise facilitated by controller 110, which may be implemented as one or more monolithic or distributed logic devices, as described herein, that may be configured to communicate with any element of vent fabrication system 100 to operate vent fabrication system 100.

Fig. 2A illustrates a view perpendicular to a surface of a vent panel 200 formed with a plurality of vents 210 in accordance with an embodiment of the disclosure. Vent 210 provides for fluids to pass through panel 200 at a first surface 220. In one embodiment, a vent panel 200 may be mechanically coupled to an aircraft skin to provide for air and/or fluid to flow through vent 210 of panel 200. In other embodiments, vent panel 200 may be mechanically coupled to an exterior of a ship to provide for a fluid such as water to flow through vent 210 of panel 200. In various embodiments, vent panel 200 includes vents 210 formed at an angle to facilitate movement of the flow field at the first surface 220. Forming vent 210 at an angle in panel 200 (e.g., as compared to vents formed perpendicular in panel 200) provides for increased surface area contact of fluid flow along the surface of vent 210 providing increased thermal transfer of fluid to vent 210 channel (e.g., such as channel 315 of Fig. 3). In some embodiments, vent panel 200 may be formed from a composite, a metal, a foam, and/or a laminate, and other material suitable for venting a moving flow field. In various embodiments, vent panel 200 may be formed from a substantially planar and/or a contoured first surface 220 of vent panel 200.

Each vent 210 of vent panel 200 may be formed at a forming angle (e.g., such as forming angle 350 of Fig. 3) through vent panel 200. Vent 210 may be formed with a circular shape at a first opening 230 when viewed at an angle perpendicular to first surface 220 of vent panel 200. By forming circular shapes at first opening 230, design equations used in analyses, as discussed herein, are simplified resulting in design cost savings. Furthermore, circular shapes at first opening 230 reduce risk of crack initiation at vent 210 first opening 230.

Fig. 2B illustrates a rotated view of the vent panel 200 of Fig. 2A in accordance with an embodiment of the disclosure. As shown in Fig. 2B, vent panel 200 is rotated to an angle 240 equivalent to the forming angle of vent 210. Accordingly, view of Fig. 2B provides a longitudinal view of vent 210. In some embodiments channel 315 of vent 210 may be formed in an elliptical shape when cutting system 130 forms a circular shape at first surface 220. In other embodiments, channel 315 may be formed in various other shapes, for example, when cutting system 130 cuts channel 315 within area of first opening 230 (e.g., within area of circular shape). In this regard, forming a circular shape at first opening 230 provides for greater reliability and design cost savings.

Fig. 3 illustrates a cross-section view taken at line 3-3 of the vent panel 200 of Fig. 2A in accordance with an embodiment of the disclosure. Fig. 3 illustrates a cross-section view of vent panel 200 including a plurality of vents 210 formed in vent panel 200. Vent 210 may be formed by vent fabrication system 100 implementing, at least in part, cutting system 130. Vent 210 extends from a first surface 220 to a second surface 370 of vent panel 200. Vent 210 includes a first opening 230 formed on first surface 220, a channel 315 extending through vent panel 200, and a second opening 330 formed on a second surface 370. In some embodiments, vent panel 200 may be formed from a composite, a metal, a foam, and/or a laminate material. Vent panel 200 may be formed from a substantially planar first surface 220. As shown in Fig. 3, each vent 210 is formed about a corresponding one of a plurality of central axis 340. Central axis 340 of vent 210 may be aligned parallel to a flow field of a fluid and/or a gas moving at first surface 220 of vent panel 200 and through vent 210. Forming angle 350 (labeled Hole Vector) may be formed at an angle aligned parallel to central axis 340 and the flow field. In this regard, forming angle 350 may vary in a range of approximately five degrees to eighty-five degrees from an angle 355 (labeled θ) perpendicular (e.g., a sum of angle 355 and angle 356 (labeled θ'), or 90 degrees) to a first surface 220 of vent panel 200 material.

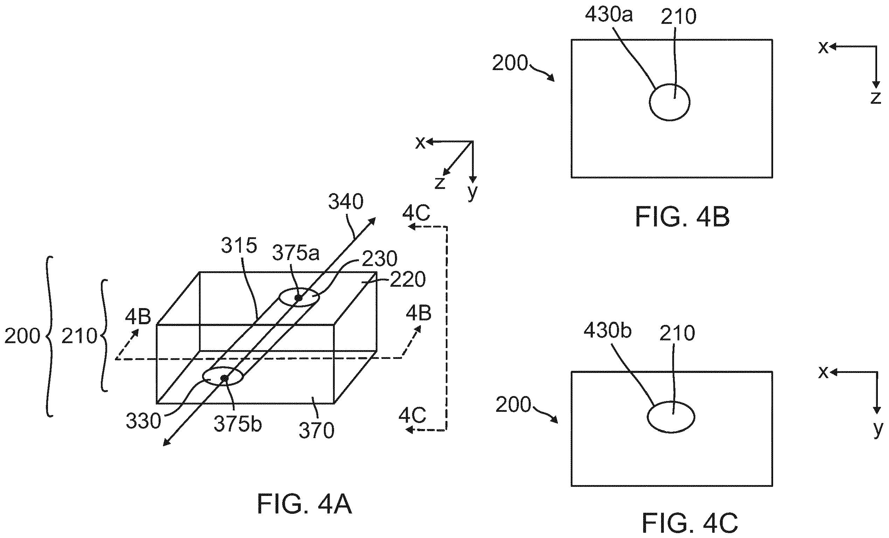

Fig. 4A illustrates an isometric view of a vent 210 through a vent panel 200 in accordance with an embodiment of the disclosure. Fig. 4A shows vent 210 formed through vent panel 200. Vent 210 includes first opening 230 formed on first surface 220 of vent panel 200. Channel 315 of vent 210 extends from first opening 230, through vent panel 200, to second opening 330. Second opening 330 may be formed on second surface 370. In some embodiments, first opening 230 and second opening 330 may be formed circular in shape with substantially the same diameter. In other embodiments, first opening 230 on first surface 220 may be formed with a first diameter and second opening 330 on second surface 370 may be formed with a second diameter. Central axis 340 extends at an angle along forming angle 350 (e.g., equal and/or substantially equal to forming angle 350) through a center point 375 (labeled 375a and 375b) of vent 210.

Fig. 4B illustrates a cross-section view taken at line 4B-4B of the vent panel 200 of Fig. 4A in accordance with an embodiment of the disclosure. As shown in Fig. 4B, vent 210 within vent panel 200 is a circular shape 430a at a cross-section parallel to a first surface 220. Fig. 4C illustrates a cross-section view taken at line 4C-4C of the vent panel 200 of Fig. 4A in accordance with an embodiment of the disclosure. As shown in Fig. 4C, vent 210 within vent panel 200 is an elliptical shape 430b at a cross-section normal to channel 315 of vent 210. In some embodiments, channel 315 may be formed after first opening 230 is formed on first surface 220 of vent 210. In this regard, cutting system 130 may be implemented to form channel 315 in a shape different than elliptical shape 430b. For example, cutting system 130 may be implemented to form channel 315 in a square shape, a circular shape, and/or various other shapes.

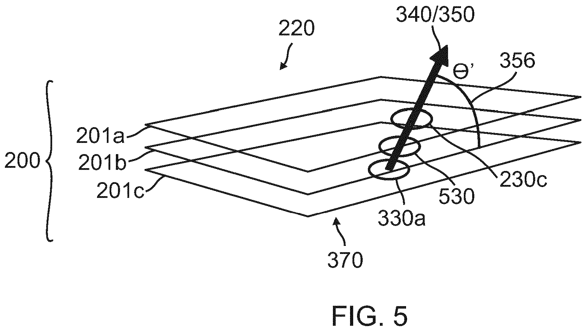

Fig. 5 illustrates an exploded view of a laminate vent panel 200 including a vent 210 formed within the vent panel 200 in accordance with an embodiment of the disclosure. As shown in Fig. 5, vent panel 200 includes one or more laminate layers 201 (labeled laminate layers 201a, 201b, and 201c). Vent 210 may be formed through laminate layers 201 at an angle 356 (labeled θ') extending from a first surface 220 through laminate layers 201 to a second surface 370 of vent panel 200 along central axis 340. Vent 210 may form first opening 230a on laminate layer 201a, opening 530 on laminate layer 201b, and second opening 330a on laminate layer 201c. In this regard, a circular shape on each laminate layer 201 may reduce the possibility of cracks at the perimeter of the vent opening.

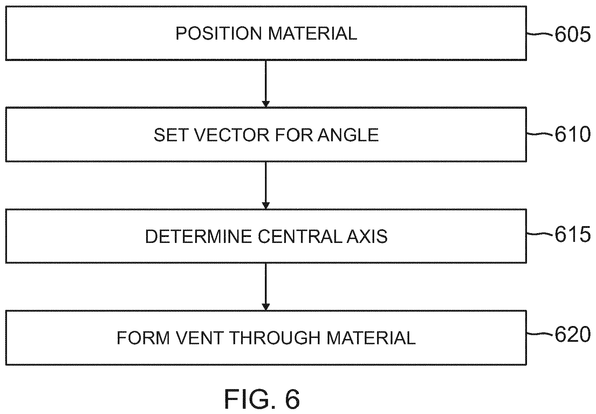

Fig. 6 illustrates a process for forming a vent 210 in a vent panel 200 in accordance with an embodiment of the disclosure.

In block 605, vent panel 200 may be positioned within fabrication system 100 at cutting system 130 in preparation for forming vents 210 in vent panel 200. In one embodiment, vent panel 200 may include a panel and/or structure made of a composite, a metal, a foam, and/or a laminate. A first surface 220 of vent panel may be substantially planar and/or contoured. In another embodiment, vent panel 200 material may include one or more AM system 140 materials such as a filament, a granule and/or a liquid AM system material. In various embodiments, cutting system 130 may be implemented as a waterjet, a laser, and/or an EDM cutting system. Transport 120 may be adapted to transport vent panel 200 material to cutting system 130 and/or move cutting system 130 to vent panel 200 material. Operation of transport 120 and/or cutting system 130 and/or other systems 140, may be controlled and/or otherwise facilitated by controller 110.

In block 610, a forming angle 350 may be determined for vent 210. Vent panel may include one or more vents 210. Vents 210 may be formed on vent panel 200 in an array. In some embodiments, a single forming angle 350 may be determined for a plurality of vents 210 within vent panel 200. In other embodiments, one or more forming angles may be determined for vent panel 200. Forming angle 350 may be determined to provide an optimal fluid flow through vent 210. In this regard, a forming angle 350 may be determined such that vent 210 is disposed at an angle in a direction of the moving flow field at a first surface 220 of vent panel 200. Controller 110 may be adapted to receive forming angle 350 (e.g., in the form of an electronic data file provided by an external logic device, such as a computer and/or a memory device) and provide forming angle 350 to cutting system 130.

In block 615, one or more central axis may be determined for vent 210. In some embodiments, vent panel 200 may include a single vent 210. In other embodiments, vent panel 200 may include an array of vents 210. For each embodiment, a central axis 340 may be determined for each vent 210. Central axis 340 extends at an angle along forming angle 350 through a center point 375 of vent 210. Controller 110 may be adapted to receive central axis in the form of an electronic data file provided by an external logic device, such as a computer and/or a memory device and provide central axis to cutting system 130.

In block 620, one or more vents 210 may be formed in vent panel 200. In this regard, cutting system 130, implemented as one or more waterjet, laser, and/or EDM cutting systems, may cut a plurality of small holes in vent panel 200 about forming angle 350 to form vent 210. Furthermore, vent 210 may be formed such that a first opening 230 of vent 210 on a first surface 220 of vent panel 200 is circular in shape when viewed at an angle perpendicular to the first surface 220. In some embodiments, first opening 230 and second opening 330 of vent 210 may be formed circular in shape with substantially the same diameter. In other embodiments, first opening 230 on first surface 220 of vent 210 may be formed with a first diameter and second opening 330 on second surface 370 of vent 210 may be formed with a second diameter.

In some embodiments, vent panel 200 and/or vents 210 may be formed by implementing other systems 140 implemented as an additive manufacturing (AM) system. AM system may include a material extrusion AM system, a powder bed fusion AM system, and/or a vat photopolymerization AM system. In other embodiments, vent 210 may be formed such as with a drilling and/or milling tool that may form an elongated shape at first opening 230 and/or second opening 330. Fabrication system 100 may implement cutting system 130 to form first opening 230 and/or second opening 330 in a circular shape after drilling and/or milling vent 210.

Where applicable, various embodiments provided by the present disclosure can be implemented using hardware, software, or combinations of hardware and software. Also where applicable, the various hardware components and/or software components set forth herein can be combined into composite components comprising software, hardware, and/or both without departing from the spirit of the present disclosure. Where applicable, the various hardware components and/or software components set forth herein can be separated into sub-components comprising software, hardware, or both without departing from the spirit of the present disclosure. In addition, where applicable, it is contemplated that software components can be implemented as hardware components, and vice-versa.

### Examples useful for understanding the described embodiments

In one embodiment, a method comprises determining a forming angle for a vent through a material, wherein the forming angle varies in a range of five degrees to eighty-five degrees from an angle perpendicular to a first surface of the material; determining a central axis of the vent along the forming angle; and forming the vent in the material about the central axis along the forming angle, wherein the vent is formed such that a first opening of the vent on the first surface of the material is circular in shape when viewed at an angle perpendicular to the first surface of the material.

The vent may be at least partially formed by a waterjet cutting system, wherein the waterjet cutting system is configured to cut the material about the central axis along the forming angle to form the vent in the material.

The vent may be at least partially formed by a laser cutting system, wherein the laser cutting system is configured to cut the material about the central axis along the forming angle to form the vent in the material.

The vent may be at least partially formed by an electric discharge machining (EDM) cutting system, wherein the EDM cutting system is configured to cut the material about the central axis along the forming angle to form the vent in the material.

The vent may be at least partially formed by an additive manufacturing system, wherein the additive manufacturing (AM) system comprises a material extrusion AM system, a powder bed fusion AM system, and/or a vat photopolymerization AM system.

The material may comprise a composite, a metal, a foam, and/or a laminate; wherein the first surface has a substantially planar and/or contoured surface.

The forming the vent may further comprise forming the circular shape with a first diameter at the first opening of the vent on the first surface of the material and forming the circular shape with a second diameter at a second opening of the vent on a second surface of the material.

The method may further comprise forming a plurality of vents in the material, wherein each of the plurality of vents are formed about a corresponding one of a plurality of central axes along the forming angle.

The method may further comprise forming a shape of a channel of the vent after forming the first opening of the vent on the first surface of the material, wherein the shape of the channel is a shape that is not elliptical.

In another embodiment, a system comprises a cutting system; and a controller configured to: receive a forming angle for a vent through a material, wherein7 the forming angle varies in a range of five degrees to eighty-five degrees from an angle perpendicular to a first surface of the material; receive a central axis of the vent along the forming angle; and control the cutting system to form the vent in the material about the central axis along the forming angle, wherein the vent is formed such that a first opening of the vent on the first surface of the material is circular in shape when viewed at an angle perpendicular to the first surface of the material.

The system may further comprise a transport system, wherein the transport system is adapted to move the material and/or the controller to the cutting system; and the transport system is controlled by the controller.

The material may comprise a composite, a metal, a foam, and/or a laminate; and a flat and/or contoured first surface.

The circular shape of the first opening of the vent on the first surface of the material may be formed with a first diameter, and wherein a circular shape of a second opening of the vent on a second surface of the material is formed with a second diameter.

The system may further comprise a plurality of vents formed in the material, wherein each of the plurality of vents are formed about a corresponding one of a plurality of central axes along the forming angle.

The vent may be at least partially formed by an additive manufacturing system, wherein the additive manufacturing (AM) system comprises a material extrusion AM system, a powder bed fusion AM system and/or a vat photopolymerization AM system.

The vent may be at least partially formed by a waterjet cutting system, wherein the waterjet cutting system is configured to cut the material about the central axis along the forming angle to form the vent in the material.

The vent may be at least partially formed by a laser cutting system, wherein the laser cutting system is configured to cut the material about the central axis along the forming angle to form the vent in the material.

The vent may be at least partially formed by an electric discharge machining (EDM) cutting system, wherein the EDM cutting system is configured to cut the material about the central axis along the forming angle to form the vent in the material.

The method may further comprise forming the vent in the material, wherein the forming angle for the vent is disposed at an angle in a direction of a media flow along the first surface of the material; and channeling the media flow through the vent.

The system may be a panel comprising one or more vents formed in the panel; and the one or more vents may be formed in the panel about the central axis along the forming angle, wherein the vent is formed such that a first opening of the vent on the first surface of the material is circular in shape when viewed at an angle perpendicular to the first surface of the material.

Software in accordance with the present disclosure, such as program code and/or data, can be stored on one or more computer readable mediums. It is also contemplated that software identified herein can be implemented using one or more general purpose or specific purpose computers and/or computer systems, networked and/or otherwise. Where applicable, the ordering of various steps described herein can be changed, combined into composite steps, and/or separated into sub-steps to provide features described herein.

Embodiments described above illustrate but do not limit the claims. It should also be understood that numerous modifications and variations are possible in accordance with the described principles. Accordingly, the scope is defined only by the following claims.

## Claims

1. A method for forming a vent, comprising:
determining a forming angle (350) for a vent (210) through a material, wherein the forming angle varies in a range of five degrees to eighty-five degrees from an angle perpendicular to a first surface (220) of the material;
determining a central axis (340) of the vent along the forming angle; and
forming the vent in the material about the central axis along the forming angle, wherein the vent is formed by making a plurality of small cuts in the material in a pattern dependent on the forming angle such that a first opening (230) of the vent on the first surface of the material is circular in shape when viewed at an angle perpendicular to the first surface of the material;
wherein the forming the vent further comprises forming the circular shape with a first diameter at the first opening of the vent on the first surface of the material and forming the circular shape with a second diameter at a second opening (330) of the vent on a second surface (370) of the material.

2. The method of claim 1, wherein the vent is at least partially formed by a waterjet cutting system, wherein the waterjet cutting system is configured to cut the material about the central axis along the forming angle to form the vent in the material.

3. The method of claim 1 or claim 2, wherein the vent is at least partially formed by a laser cutting system, wherein the laser cutting system is configured to cut the material about the central axis along the forming angle to form the vent in the material.

4. The method of any of claims 1 to 3, wherein the vent is at least partially formed by an electric discharge machining (EDM) cutting system, wherein the EDM cutting system is configured to cut the material about the central axis along the forming angle to form the vent in the material.

5. The method of any of claims 1 to 4, wherein the vent is at least partially formed by an additive manufacturing (AM) system, wherein the AM system comprises a material extrusion AM system, a powder bed fusion AM system, and/or a vat photopolymerization AM system.

6. The method of any of claims 1 to 5, wherein the material comprises:
a composite, a metal, a foam, and/or a laminate; and
wherein the first surface has a substantially planar and/or contoured surface.

7. The method of any of claims 1 to 6, further comprising forming a plurality of vents in the material, wherein each of the plurality of vents are formed about a corresponding one of a plurality of central axes along the forming angle.

8. The method of any of claims 1 to 7, further comprising forming a shape of a channel of the vent after forming the first opening of the vent on the first surface of the material, wherein the shape of the channel is a shape that is not elliptical.

9. A vent fabrication system (100) comprising:
a cutting system (130); and
a controller (110) configured to:
receive a forming angle for a vent through a material, wherein the forming angle varies in a range of five degrees to eighty-five degrees from an angle perpendicular to a first surface of the material;
receive a central axis of the vent along the forming angle; and
control the cutting system to form the vent in the material about the central axis along the forming angle, wherein the vent is formed by making a plurality of small cuts in the material in a pattern dependent on the forming angle such that a first opening of the vent on the first surface of the material is circular in shape when viewed at an angle perpendicular to the first surface of the material;
wherein the forming the vent further comprises forming the circular shape with a first diameter at the first opening of the vent on the first surface of the material and forming the circular shape with a second diameter at a second opening of the vent on a second surface of the material.

10. The vent fabrication system of claim 9, further comprising a transport system (120), wherein:
the transport system is adapted to move the material and/or the controller to the cutting system; and
the transport system is controlled by the controller.

11. The vent fabrication system of claim 9 or claim 10, wherein the material comprises:
a composite, a metal, a foam, and/or a laminate; and
a flat and/or contoured first surface.

12. The vent fabrication system of any of claims 9 to 11, further comprising a plurality of vents formed in the material, wherein each of the plurality of vents are formed about a corresponding one of a plurality of central axes along the forming angle.

13. The vent fabrication system of any of claims 9 to 12, wherein the vent is at least partially formed by an additive manufacturing (AM) system, wherein the AM system comprises a material extrusion AM system, a powder bed fusion AM system and/or a vat photopolymerization AM system.

## Patentansprüche

1. Verfahren zum Bilden eines Luftdurchlasses, umfassend:
Bestimmen eines Ausbildungswinkels (350) für einen Luftdurchlass (210) in einem Material, wobei der Ausbildungswinkel in einem Bereich von fünf Grad bis fünfundachtzig Grad von einem Winkel senkrecht zu einer ersten Oberfläche (220) des Materials variiert;
Bestimmen einer Mittelachse (340) des Luftdurchlasses entlang des Ausbildungswinkels; und
Bilden des Luftdurchlasses im Material um die Mittelachse entlang des Ausbildungswinkels, wobei der Luftdurchlass gebildet wird, indem eine Mehrzahl von kleinen Einschnitten in das Material in einem Muster in Abhängigkeit von dem Ausbildungswinkel gemacht wird, so dass eine erste Öffnung (230) des Luftdurchlasses auf der ersten Oberfläche des Materials eine kreisrunde Form hat, wenn sie unter einem Winkel senkrecht zu der ersten Oberfläche des Materials betrachtet wird;
wobei das Ausbilden des Luftdurchlasses ferner das Ausbilden der Kreisform mit einem ersten Durchmesser an der ersten Öffnung des Luftdurchlasses auf der ersten Oberfläche des Materials und das Ausbilden der Kreisform mit einem zweiten Durchmesser an einer zweiten Öffnung (330) des Luftdurchlasses auf einer zweiten Oberfläche (370) des Materials umfasst.

2. Verfahren nach Anspruch 1, bei dem der Luftdurchlass zumindest teilweise durch ein Wasserstrahlschneidsystem gebildet wird, wobei das Wasserstrahlschneidsystem konfiguriert ist, um das Material um die Mittelachse entlang des Ausbildungswinkels zu schneiden, um den Luftdurchlass in dem Material zu bilden.

3. Verfahren nach Anspruch 1 oder Anspruch 2, bei dem der Luftdurchlass zumindest teilweise durch ein Laserschneidsystem gebildet wird, wobei das Laserschneidsystem konfiguriert ist, um das Material um die Mittelachse entlang des Ausbildungswinkels zu schneiden, um den Luftdurchlass in dem Material zu bilden.

4. Verfahren nach einem der Ansprüche 1 bis 3, bei dem der Luftdurchlass zumindest teilweise durch ein Funkenerosionsschneidsystem (EDM-Schneidsystem) gebildet wird, wobei das EDM-Schneidsystem konfiguriert ist, um das Material um die Mittelachse entlang des Ausbildungswinkels zu schneiden, um den Luftdurchlass in dem Material zu bilden.

5. Verfahren nach einem der Ansprüche 1 bis 4, bei dem der Luftdurchlass zumindest teilweise durch ein additives Fertigungssystem (AM-System) gebildet wird, wobei das AM-System ein Materialextrusions-AM-System, ein Pulverbettschmelz-AM-System und/oder ein Wannen-Photopolymerisations-AM-System umfasst.

6. Verfahren nach einem der Ansprüche 1 bis 5, bei dem das Material umfasst:
einen Verbundwerkstoff, ein Metall, einen Schaumstoff und/oder ein Laminat; und
die erste Oberfläche eine im Wesentlichen ebene und/oder konturierte Oberfläche aufweist.

7. Verfahren nach einem der Ansprüche 1 bis 6, ferner umfassend das Ausbilden einer Mehrzahl von Luftdurchlässen in dem Material, wobei jeder der Mehrzahl von Luftdurchlässen um eine entsprechende einer Mehrzahl von Mittelachsen entlang des Ausbildungswinkels ausgebildet wird.

8. Verfahren nach einem der Ansprüche 1 bis 7, ferner umfassend das Ausbilden einer Gestalt eines Kanals des Luftdurchlasses nach dem Ausbilden der ersten Öffnung des Luftdurchlasses auf der ersten Oberfläche des Materials,
wobei die Gestalt des Kanals eine nicht-elliptische Gestalt ist.

9. System zum Herstellen eines Luftdurchlasses (100), umfassend:
ein Schneidsystem (130); und
eine Steuerung (110), die konfiguriert ist, um:
einen Ausbildungswinkel für einen Luftdurchlass durch ein Material zu empfangen, wobei der Ausbildungswinkel in einem Bereich von fünf Grad bis fünfundachtzig Grad von einem Winkel senkrecht zu einer ersten Oberfläche des Materials variiert;
eine Mittelachse des Luftdurchlasses entlang des Ausbildungswinkels zu empfangen; und
das Schneidsystem zu steuern, um den Luftdurchlass in dem Material um die Mittelachse entlang des Ausbildungswinkels zu bilden, wobei der Luftdurchlass gebildet wird, indem eine Mehrzahl von kleinen Schnitten in dem Material in einem vom Ausbildungswinkel abhängigen Muster so ausgeführt wird, dass eine erste Öffnung des Luftdurchlasses auf der ersten Oberfläche des Materials eine kreisrunde Gestalt hat, wenn sie unter einem Winkel senkrecht zur ersten Oberfläche des Materials betrachtet wird;
wobei das Ausbilden des Luftdurchlasses ferner das Ausbilden der Kreisform mit einem ersten Durchmesser an der ersten Öffnung des Luftdurchlasses auf der ersten Oberfläche des Materials und das Ausbilden der Kreisform mit einem zweiten Durchmesser an einer zweiten Öffnung des Luftdurchlasses auf einer zweiten Oberfläche des Materials umfasst.

10. System zum Herstellen eines Luftdurchlasses nach Anspruch 9, ferner mit einem Transportsystem (120), wobei:
das Transportsystem ausgelegt ist, das Material und/oder die Steuerung zu dem Schneidsystem zu bewegen; und
das Transportsystem von der Steuerung gesteuert ist.

11. System zum Herstellen eines Luftdurchlasses nach Anspruch 9 oder 10, bei dem das Material umfasst:
einen Verbundstoff, ein Metall, einen Schaumstoff und/oder ein Laminat; und
eine ebene und/oder konturierte erste Oberfläche.

12. System zum Herstellen eines Luftdurchlasses nach einem der Ansprüche 9 bis 11, ferner umfassend eine Mehrzahl von in dem Material ausgebildeten Luftdurchlässen, wobei jeder der Mehrzahl von Luftdurchlässen um eine entsprechende einer Mehrzahl von Mittelachsen entlang des Ausbildungswinkels ausgebildet ist.

13. System zum Herstellen eines Luftdurchlasses nach einem der Ansprüche 9 bis 12, wobei der Luftdurchlass zumindest teilweise durch ein additives Fertigungssystem (AM-System) gebildet wird, wobei das AM-System ein Materialextrusions-AM-System, ein Pulverbettschmelz-AM-System und/oder ein Wannen-Photopolymerisations-AM-System umfasst.

## Revendications

1. Procédé de formation d'un évent, comprenant les étapes consistant à :
déterminer un angle de formation (350) pour un évent (210) à travers un matériau, dans lequel l'angle de formation varie dans une plage de cinq degrés à quatre-vingt-cinq degrés à partir d'un angle perpendiculaire à une première surface (220) du matériau ;
déterminer un axe central (340) de l'évent le long de l'angle de formation ; et
former l'évent dans le matériau autour de l'axe central le long de l'angle de formation, dans lequel l'évent est formé en effectuant une pluralité de petites découpes dans le matériau selon un motif dépendant de l'angle de formation de sorte qu'une première ouverture (230) de l'évent sur la première surface du matériau est de forme circulaire lorsqu'elle est vue selon un angle perpendiculaire à la première surface du matériau ;
dans lequel la formation de l'évent comprend en outre la formation de la forme circulaire avec un premier diamètre au niveau de la première ouverture de l'évent sur la première surface du matériau et la formation de la forme circulaire avec un second diamètre au niveau d'une seconde ouverture (330) de l'évent sur un seconde surface (370) du matériau.

2. Procédé selon la revendication 1, dans lequel l'évent est au moins partiellement formé par un système de découpe à jet d'eau, dans lequel le système de découpe à jet d'eau est configuré pour découper le matériau autour de l'axe central le long de l'angle de formation pour former l'évent dans le matériau.

3. Procédé selon la revendication 1 ou la revendication 2, dans lequel l'évent est au moins partiellement formé par un système de découpe à laser, dans lequel le système de découpe à laser est configuré pour découper le matériau autour de l'axe central le long de l'angle de formation pour former l'évent dans le matériau.

4. Procédé selon l'une quelconque des revendications 1 à 3, dans lequel l'évent est au moins partiellement formé par un système de découpe d'usinage par décharge électrique (EDM), dans lequel le système de découpe EDM est configuré pour découper le matériau autour de l'axe central le long de l'angle de formation pour former l'évent dans le matériau.

5. Procédé selon l'une quelconque des revendications 1 à 4, dans lequel l'évent est au moins partiellement formé par un système de fabrication additive (AM), dans lequel le système AM comprend un système AM d'extrusion de matériau, un système AM de fusion sur lit de poudre et/ou un système AM de photopolymérisation en cuve.

6. Procédé selon l'une quelconque des revendications 1 à 5, dans lequel le matériau comprend :
un composite, un métal, une mousse et/ou un stratifié ; et
dans lequel la première surface a une surface sensiblement plane et/ou profilée.

7. Procédé selon l'une quelconque des revendications 1 à 6, comprenant en outre la formation d'une pluralité d'évents dans le matériau, dans lequel chacun de la pluralité d'évents est formé autour d'un correspondant d'une pluralité d'axes centraux le long de l'angle de formation.

8. Procédé selon l'une quelconque des revendications 1 à 7, comprenant en outre la formation d'une forme d'un canal de l'évent après avoir formé la première ouverture de l'évent sur la première surface du matériau, dans lequel la forme du canal est une forme qui n'est pas elliptique.

9. Système de fabrication d'évent (100) comprenant :
un système de découpe (130) ; et
un dispositif de commande (110) configuré pour :
recevoir un angle de formation pour un évent à travers un matériau, dans lequel l'angle de formation varie dans une plage de cinq degrés à quatre-vingt-cinq degrés à partir d'un angle perpendiculaire à une première surface du matériau ;
recevoir un axe central de l'évent le long de l'angle de formation ; et
commander le système de découpe pour former l'évent dans le matériau autour de l'axe central le long de l'angle de formation, dans lequel l'évent est formé en réalisant une pluralité de petites découpes dans le matériau selon un motif dépendant de l'angle de formation de telle sorte qu'une première ouverture du l'évent sur la première surface du matériau est de forme circulaire lorsqu'elle est vue selon un angle perpendiculaire à la première surface du matériau ;
dans lequel la formation de l'évent comprend en outre la formation de la forme circulaire avec un premier diamètre au niveau de la première ouverture de l'évent sur la première surface du matériau et la formation de la forme circulaire avec un second diamètre au niveau d'une seconde ouverture (330) de l'évent sur un seconde surface (370) du matériau.

10. Système de fabrication d'évent selon la revendication 9, comprenant en outre un système de transport (120), dans lequel :
le système de transport est adapté pour déplacer le matériau et/ou le dispositif de commande vers le système de découpe ; et
le système de transport est commandé par le dispositif de commande.

11. Système de fabrication d'évent selon la revendication 9 ou la revendication 10, dans lequel le matériau comprend :
un composite, un métal, une mousse et/ou un stratifié ; et
une première surface plane et/ou profilée.

12. Système de fabrication d'évent selon l'une quelconque des revendications 9 à 11, comprenant en outre une pluralité d'évents formés dans le matériau, dans lequel chacun de la pluralité d'évents est formé autour d'un correspondant parmi une pluralité d'axes centraux le long de l'angle de formation.

13. Système de fabrication d'évent selon l'une quelconque des revendications 9 à 12, dans lequel l'évent est au moins partiellement formé par un système de fabrication additive (AM), dans lequel le système AM comprend un système AM d'extrusion de matériau, un système AM de fusion sur lit de poudre et/ou un système AM de photopolymérisation en cuve.
